# EUROPÄISCHE PATENTSCHRIFT

(11) **EP 0 765 526 B1**
(45) Veröffentlichungstag und Bekanntmachung des Hinweises auf die Patenterteilung: **27.05.1998**
(21) Anmeldenummer: 95923302.4
(22) Anmeldetag: 12.06.1995
(51) Int. Cl.: H01F 1/08, H01F 1/113, H01F 1/26, H01F 1/37

(54) **ZUSAMMENSETZUNG AUF POLYMERBASIS ZUR HERSTELLUNG VON MAGNETISCHEN UND MAGNETISIERBAREN FORMKÖRPERN**
POLYMER COMPOSITION FOR THE PRODUCTION OF MAGNETIC AND MAGNETIZABLE MOULDINGS
COMPOSITION A BASE DE POLYMERE POUR LA PRODUCTION DE CORPS MOULES MAGNETIQUES ET MAGNETISABLES

(30) Priorität: 11.06.1994 DE 4420318
(43) Veröffentlichungstag der Anmeldung: 02.04.1997
(73) Patentinhaber: A. SCHULMAN GMBH, 50170 Kerpen (DE)
(72) Erfinder: CHRIST, Hubert, D-52399 Merzenich (DE); MEYERHOFF, Hans-Peter, D-50189 Elsdorf (DE)
(74) Vertreter: Godemeyer, Thomas, Dr.
(86) Internationale Anmeldenummer: EP9502256
(87) Internationale Veröffentlichungsnummer: WO9534902

(56) Entgegenhaltungen:
- EP-A- 0 236 116
- EP-A- 0 271 929
- PATENT ABSTRACTS OF JAPAN vol. 008 no. 119 (E-248) ,5.Juni 1984 & JP,A,59 032107 (SUWA SEIKOSHA KK) 21.Februar 1984,

## Beschreibung

Gegenstand der Erfindung ist eine Zusammensetzung auf Polymerbasis zur Herstellung von magnetischen und magnetisierbaren Formkörpern.

Die Zusammensetzung besteht aus einer dauermagnetischen und/oder ferromagnetischen, metallhaltigen Verbindung und einem Polymer. Weitere Gegenstände der Erfindung sind ein Verfahren zur Herstellung dieser Zusammensetzung, die Verwendung der Zusammensetzung, Formteile aus dieser Zusammensetzung und ein Verfahren zur Herstellung dieser Formteile sowie magnetische Formkörper und Verfahren zu ihrer Herstellung.

Anisotrope Dauermagnete aus Metallpulvern können nach dem Stand der Technik auf verschiedene Art und Weise hergestellt werden. Das meist verwendete Verfahren für die Herstellung von gesinterten, anisotropen Dauermagneten aus Pulvern ist das Pressen im Magnetfeld und das anschließende Sintern der gepreßten Teile. So werden Dauermagnete verschiedener Art, deren magnetische Ausrichtung vorzugsweise in der Pressrichtung oder quer zur Pressrichtung angeordnet ist, hergestellt. Ein derartiges Verfahren zum Pressen von Metallpulvern für Dauermagnete mit radialer Vorzugsrichtung ist jedoch nur beschränkt anwendbar für Magnete mit niedrigem Höhe-/Durchmesserverhältnis, wobei die so hergestellten Magnete nur schwach magnetische Eigenschaften besitzen. Mit diesen Pressverfahren werden auch pol-orientierte Ringmagnete gefertigt. Hier ist das Verfahren jedoch nachteilig durch die Füllungsprobleme, die schwache Orientierung und das Auftreten von Rissen bei den gesinterten Teilen.

Ein weiteres bekanntes Verfahren zur Herstellung der gesinterten, anisotropen Magnete ist das Strang-Zieh-Verfahren.

Durch dieses Verfahren wird eine radiale Anisotropie erzeugt, wobei die resultierende Energiedichte jedoch nur etwas höher ist als bei den isotropen Magneten.

Neben diesen Verfahren, die auf der Verwendung von Metallpulvern basieren, sind weitere Verfahren bekannt, in denen die Metallpulver über Bindemittel an Polymere gebunden werden. So wird für die Herstellung von anisotropen Dauermagneten aus Metallpulver zunächst eine Bindung zwischen dem Pulver und einem Polymer erzeugt und die so hergestellte Masse durch Pressen, Spritzen, Kalandrieren oder Extrudieren und Einprägung der Vorzugsrichtung mit mechanischen oder magnetischen Methoden weiterverarbeitet.

Diese anisotropen, kunststoffgebundenen Dauermagnete zeigen in der Regel bessere Eigenschaften als die isotropen Dauermagnete aus dem gleichen magnetischen Werkstoff und können auch verschiedene Vorzugsrichtungen aufweisen wie axial, diametral, radial und mehrpolig. Durch die Einbettung in Polymere ist aber die Energiedichte begrenzt, und die hohen Werte der entsprechend gesinterten Dauermagnete können nicht erreicht werden.

Aus dem Stand der Technik sind bereits verschiedene Zusammensetzungen bekannt, die neben einer dauermagnetischen und/oder ferromagnetischen, metallhaltigen Verbindung ein Polymer enthalten. Diese Zusammensetzungen werden insbesondere zur Herstellung von kunststoffgebundenen Dauermagneten oder Induktionsmagneten verwendet.

Die DE-A 29 52 820 beschreibt matrixgebundene Permanentmagnete mit hochausgerichteten Magnetteilchen sowie deren Herstellung. Als nichtmagnetisches Bindemittel wird ein Heißschmelzpolyamidharz benutzt. Die granulierte Mischung aus Ferrit und Polyamid wird in eine Spritzformmaschine gegeben und während des Einspritzens einem Magnetfeld ausgesetzt.

Der Nachteil dieses Verfahrens liegt darin, daß die so hergestellten Magnete eine relativ hohe Schrumpfung und schlechte Dimensionsstabilität besitzen, die durch Wasseraufnahme des Polyamids entsteht. Komplizierte Werkzeuge zur Herstellung von Spritzlingen können aus diesem Material in den meisten Fällen nur durch aufwendiges Nacharbeiten hergestellt werden.

Die DE-A 27 36 642 berichtet ebenfalls über kunststoffgebundene Dauermagnete und ein Verfahren zu ihrer Herstellung. Dabei wird als Kunststoff Polystyrol verwendet, wobei als Lösungsmittel Benzol eingesetzt wird. Das pulverförmige, dauermagnetische Metall und Polystyrol, das in Benzol gelöst wurde, werden vermischt und in einem magnetischen Feld vormagnetisiert. Nach Abdampfen des Lösungsmittels und Zerkleinern erhält man ein spritzfähiges Granulat. Dieses wird nach dem Spritzguß endgültig magnetisiert. Nachteil dieses Verfahrens ist es, daß die Polymermatrix in einem Lösungsmittel gelöst wird, das in einem weiteren Verarbeitungsschritt wieder abgetrennt werden muß und darüber hinaus extrem toxisch ist.

Die DE-A 36 26 360 beschreibt ein Herstellungsverfahren für zwei- und mehrpolige Dauermagnete mit hoher magnetischer Energiedichte. Dabei wird ein dauermagnetisches Pulver mit Polymeren wie Polyamid, Polyurethan, Polypropylen, Polyethylen oder Polystyrol in einem Gewichtsverhältnis von 1:1 bis 20:1 gemischt und granuliert. Das so entstandene Granulat wird in einem Magnetfeld thermoplastisch in die gewünschte Form gespritzt, wobei die im Endzustand gewünschten Vorzugsrichtungen eingeprägt werden. Die so gespritzten Teile werden anschließend gesintert und eventuell weiter mechanisch bearbeitet. Es erfolgt dann eine Magnetisierung der gesinterten Magnete mit Rücksicht auf die eingeprägten Pole.

Die EP-A 0 350 781 beschreibt ein pulverförmiges magnetisches Material und einen daraus hergestellten Magneten. Dabei wird ein kristallines, thermoplastisches Harz mit hoher Hitzebeständigkeit auf magnetisches Pulver aufgebracht. Als thermoplastisches Harz wird bevorzugt Polyetheretherketon, Polyetherketon, Polyphenylensulfid oder Polysulfidketon verwendet. Die beschichteten, magnetischen Pulver werden unter Verwendung von extrem umweltbelastenden, hoch siedenden Lösungsmitteln hergestellt, wobei die Lösungsmittel in einem anschließenden Schritt unter Erhitzen extrahiert werden müssen. Die nach diesem Verfahren hergestellten Magnete haben den Nachteil, leicht spröde zu sein und ohne Vorbehandlung der verwendeten Magnetpulver leicht zu brechen.

Die DE-A 26 13 904 beschreibt ein Verfahren zur Herstellung von Dauermagneten aus Epoxidharz und ungesättigtem Polyesterharz. Der Nachteil dieses Verfahrens ist es, daß die so hergestellten Magnete zur Verhinderung von Korrosion mit Schutzschichten aus Nickel oder Cadmium versehen werden müssen, um die Sauerstoffdiffusion durch die Polymerschicht zu unterbinden.

Aus dem Stand der Technik sind zwar zahlreiche Zusammensetzungen und Herstellungsverfahren für kunststoffgebundene Dauermagnete bekannt. Die Zusammensetzungen und die daraus hergestellten Dauermagnete besitzen jedoch den Nachteil, nicht formbeständig zu sein und zusätzliche Verarbeitungsschritte erforderlich zu machen, um vorteilhafte Materialeigenschaften zu erreichen. So wird beispielsweise, um die Formbeständigkeit der Magnete des Standes der Technik zu verbessern, häufig nach der Formung der Magnete ein Sinterprozeß angeschlossen, der dann zu zusätzlicher Formstabilität führt. Weiterhin werden bei einigen Verfahren Lösungsmittel verwendet, die einerseits toxisch sind und andererseits in aufwendiger Weise wieder entfernt werden müssen.

Der Erfindung liegt daher das technische Problem zugrunde, eine Zusammensetzung aus einer dauermagnetischen und/oder ferromagnetischen, metallhaltigen Verbindung und einem Polymer zur Verfügung zu stellen, die bei der Herstellung von anisotropen Permanentmagneten und induktiven Magneten zu temperaturbeständigen und formstabilen Produkten führt. Ferner soll bei der Verarbeitung der erfindungsgemäßen Zusammensetzung der bisher notwendige Verfahrensschritt des Sinterns wegfallen und ohne Anwendung von Lösungsmitteln gearbeitet werden. Dadurch soll die Herstellung von Permanentmagneten und induktiven Magneten erheblich wirtschaftlicher möglich sein als dies nach den Verfahren des Standes der Technik mit den dort beschriebenen Zusammensetzungen zur Zeit durchführbar ist.

Das technische Problem der Erfindung wird gelöst durch eine Zusammensetzung enthaltend 45 bis 99 Gewichtsprozent einer dauermagnetischen und/oder ferromagnetischen, metallhaltigen Verbindung, 1 bis 55 Gewichtsprozent eines Polymers der Formel I

HO-[-CO-R₁-CO-X-Y-Z-]ₙ-H (I)

worin R₁ gleich Phenyl, Naphthyl, Cyclohexyl, Cyclohexenyl oder ein C₁ bis C₄ alkyl-substituiertes Derivat davon ist und, wenn R₁ gleich Phenyl ist, die Carboxy-Gruppen in ortho-, meta- oder para- Stellung zueinander stehen,
X, Z gleich O oder NR₂ sind, wobei R₂ gleich H oder C₁ bis C₄ Alkyl ist,
Y = (CH₂)ₘ oder Phenyl, Cyclohexyl oder Cyclopentyl ist und m = 1 bis 12 ist,
n eine ganze Zahl, vorzugsweise 10 bis 1000 ist.

In einer bevorzugten Ausführungsform besteht die Zusammensetzung aus 74 bis 99 Gewichtsprozent metallhaltiger Verbindung und 1 bis 26 Gewichtsprozent Polymer.

Als Polymere der Formel I sind bevorzugt Polymere ausgewählt aus der Gruppe Poly-(C₁-C₄) alkylenterephthalat, Polynaphthylsäureamid, Polyisophthalsäureamid, Polyterephthalsäureamid, Polyterephthalsäurehexamethylendiamid oder Gemische derselben enthalten. Besonders bevorzugt sind Polyethylenterephthalat und/oder Polybutylenterephthalat.

Diese Polymere können in jeder beliebigen Weise mit weiteren Polymeren gemischt werden. Hierfür werden Polymere aus der Gruppe Polyester, Polyesteramide, Polyphenylenether, Phenylenether, Polyphenylensulfide, aromatische Polyetheramide, Polyamide und Polylactame verwendet. Besonders bevorzugt sind Polymere ausgewählt aus der Gruppe Polydiaminobutandiadipidamid, Polyhexamethylensebacidamid, Polyhexamethylendodecanamid, Polyaminoundecanamid, Polylaurinlactam, Polyarylamid oder Gemische derselben.

Weiterhin können die in der DE-A 38 28 690 auf S.4 und 5 als Komponente C beschriebenen Modifier als Zusatzstoffe eingesetzt werden. Dabei handelt es sich um Pfropfpolymerisate, die man durch Pfropfpolymerisation von 5 bis 90 Gew.-Tl., vorzugsweise von 10 bis 70 Gew.-Tl., insbesondere 15 bis 50 Gew.-Tl. wenigstens eines Vinylmonomerengemisches aus Methylmethacrylat und einem Acrylsäureester eines primären oder sekundären einwertigen aliphatischen C₂ bis C₁₀-Alkohols, wie n-Butylacrylat, auf 10 bis 95, vorzugsweise 30-90, insbesondere 50 bis 85 Gew.-Tl. eines teilchenförmigen vernetzten Dienkautschuks erhält.

Zusätzlich können als Pfropfmonomere noch 0,1 bis 10 Gew.-Tl. des Acryl- oder Methacrylsäureesters des tertiären Butanols und/oder 0,1-30 Gew.-Tl. einer Mischung aus Styrol oder α-Methylstyrol und Acrylnitril, Methacrylnitril oder Maleinsäureanhydrid auf die Kautschukgrundlage aufgepfropft werden.

Besonders bevorzugte Pfropfmonomere sind Mischungen von Methylmethacrylat und n-Butylacrylat im Mengenverhältnis von 85:15 bis 98:2 sowie Mischungen davon mit tert.-Butylacrylat und/oder Styrol und Acrylnitril (Verhältnis 72:28).

Bevorzugte Dienkautschuke sind vernetzte Homo- und/oder Copolymerisate aus konjugierten C₄ bis C₆-Dienen. Bevorzugtes Dien ist Butadien-1,3. Die Diencopolymere können neben den Dienresten bis zu 20 Gew.%, bezogen auf das Diencopolymerisat, Reste anderer ethylenisch ungesättigter Monomeren, wie Styrol, Acrylnitril, Ester der Acryl- oder Methacrylsäure mit einwertigen C₁ bis C₄-Alkoholen, wie Methylacrylat, Ethylacrylat, Methylmethacrylat und Ethylmethacrylat einpolymerisiert enthalten. Die Herstellung der Dien-Kautschuk-Pfropfgrundlage und der daraus hergestellten Pfropfpolymerisate wird z. B. in "Methoden der Organischen Chemie" (Houben-Weyl), Bd. 14/1, Georg Thieme Verlag, Stuttgart 1961, S.383 bis 406 und in "Ullmanns Encyclopädie der technischen Chemie", 4.Auflage, Bd. 19, Verlag Chemie, Weinheim 1981, S.279 bis 284, beschrieben.

Als weitere Zusätze für die erfindungsgemäße Zusammensetzung können übliche Modifier des Standes der Technik verwendet werden. Im einzelnen seien genannt:

Die in der DE-A 38 41 183 auf den Seiten 4 und 5 beschriebenen Pfropfpolymerisate B. Hierzu gehören beispielsweise Pfropfpolymerisate aus Acrylatkautschuk mit einer Glasübergangstemperatur unter -20°C als Pfropfgrundlage und polymerisierbare ethylenisch ungesättigte Monomere mit einer Glasübergangstemperatur über 25°C als Pfropfmonomere und mit Styrol und/oder Acrylnitril und/oder (Meth-)Acrylsäurealkylestern gepfropfte Polybutadiene, Butadien/Styrol-Copolymerisate und Acrylatkautschuke.

Ebenso können Silikonkautschuke mit pfropfaktiven Stellen, die in den DE-A 37 04 657, DE-A 37 04 655, DE-A 36 31 540 und DE-A 36 31 539 beschrieben sind, verwendet werden. Ähnliche Modifier auf Silikonkautschukbasis werden auch im Stand der Technik der Druckschriften DE-A 37 25 576, EP-A 0 235 690, DE-A 38 00 603 und EP-A 0 319 290 beschrieben.

In der EP-A 0 233 473 sind elastomere Komponenten wie Acrylsäurederivate mit Epoxygruppen enthaltenden Monomeren als Pfropfauflage beschrieben. Die EP-A 0 319 581 beschreibt Modifier aus Ethylencopolymer mit α, β-ungesättigten Carbonsäurealkylestern und Maleinsäureanhydrid. EP-A 0 256 461 beschreibt auf den Seiten 5 und 6 eine Reihe von Ethylen-Propylen-Kautschuken (EPM-Kautschuk) und Ethylen-Propylen-Dien-Kautschuken (EPDM-Kautschuken) sowie deren Kombinationsmöglichkeit mit anderen Modifiern. Die Kautschuke weisen ein Verhältnis von Ethylen- zu Propylen-Einheiten von 20:80 bevorzugt 65:35 auf. Ähnlich aufgebaute Polymere werden auch als Schlagzähmodifier in EP-A 0 320 651 und EP-A 0 320 647 beschrieben. Auch die EP-A 0 484 737 beschreibt endgruppenstabilisierte Polyoxymethylenpolymerisate, EPM- und EPDM-Kautschuke, die mit Acrylsäurederivaten Epoxiden, Dicarbonsäuren und Dicarbonsäureanhydriden, Polymerisaten aus Styrolderivaten, Acrylsäurederivaten, Acrylnitril und Polyenen gepfropft sind. Dafür geeignete pfropfvernetzende Monomere sind in der US-A 4,148,846 beschrieben.

Die EP-A 0 313 862 berichtet über den Einsatz von Ethylenvinylalkohol zusammen mit gepfropftem, hydrierten Styrol-Ethylen-Butylenblockcopolymer, modifiziert mit einer ungesättigten Dicarbonsäure oder einem ungesättigten Dicarbonsäureanhydrid. In der EP-A 0 389 055 ist der Einsatz von Epoxy- und Oxazolingruppen enthaltenden aromatischen Vinyl-Dien-Vinyl-Cyanid-Copolymeren oder aromatischen Polyestern als Copolymere beschrieben.

Als weitere Modifier sind auch Polyurethane einsetzbar wie in den EP-A 0 115 846, EP-A 0 115 847, EP-A 0 116 456, EP-A 0 117 664 und EP-A 0 327 384 erwähnt wird. Kommerziell im Handel erhältlich sind derartige Produkte unter der Bezeichnung Desmopan® (Hersteller: Bayer AG) und Elastolan® (Hersteller: Elastogran Polyurethane GmbH).

Weiterhin können auch polyfluorierte Derivate des Ethylens, Propylens, Butylens und Vinylens eingesetzt werden. Derartige Produkte sind im Handel unter der Bezeichnung Elastosil® (Hersteller: Wacker Chemie) erhältlich. Auch Modifier mit Tetrafluorethylen (PTFE), Molybdänsulfid, Graphit und Silanen, erhältlich unter der Bezeichnung Lubrilon® (Hersteller: Com Alloy), können eingesetzt werden.

Die WO-A 93/08234 beschreibt den Einsatz von Ethyl-Copolymerionomeren und Copolyesterurethanen, die ebenfalls als Modifier geeignet sind.

Die Modifier können in der erfindungsgemäßen Zusammensetzung in einer Menge von 0 bis 70 Gew%, insbesondere von 0 bis 40 Gew%, bezogen auf den Gesamtpolymergehalt enthalten sein.

Die Herstellung von Polybutylenterephthalat und Polyethylenterephthalat ist beschrieben in Kunststoffhandbuch, Band VIII, Polyester, von Dr. L. Goerden, Carl Hanser Verlag, München 1971. Polybutylenterephthalat wird hergestellt aus Dimethylterephthalat und 1,4-Butandiol; Polyethylenterephthalat wird hergestellt aus Dimethylterephthalat und 1,2- Ethandiol. Die Herstellung von Polyterephthalsäureamid ist im Kunststoffhandbuch VI, Polyamide, von Prof. Dr. Vieweg und Dr. A. Müller, Carl Hanser Verlag, München 1966, beschrieben. Polyterephthalsäureamide werden hergestellt aus Terephthalsäure und α, ω-Diaminen.

Als Polyterephthalsäurehexamethylendiamid wird bevorzugt ein solches verwendet, das mit anderen Polyamiden wie Polyamid 6 oder Polyamid 66 polymerisiert wird. Ebenso sind Copolyamide aus Dimethylterephthalsäure und Trimethylhexamethylendiamin oder Isophthalsäure und Hexamethylendiamin in Kombination mit den oben genannten Polyterephthalsäureamiden einsetzbar. Weiterhin mischbar mit diesen Polymeren der Formel I sind Polydiaminobutandiadipidamid, Polyhexamethylensebacidamid, Polyhexamethylendodecanamid, Polyaminoundecanamid, Polylaurinlactam und Polyarylamid aus meta-Xylylendiamin und Adipinsäure. In einer bevorzugten Ausführungsform enthält die Zusammensetzung 84 bis 92 Gewichtsprozent der dauermagnetischen und/oder ferromagnetischen metallhaltigen Verbindung und 8 bis 16 Gewichtsprozent Polymer.

Als dauermagnetische und/oder ferromagnetische metallhaltige Verbindungen werden bevorzugt dauerhaft magnetische Metallegierungen und/oder ferromagnetische, metallhaltige Verbindungen eingesetzt. Als dauerhaft magnetisches Material werden Legierungen der Metalle ausgewählt aus der Gruppe des Aluminiums, Nickels, Kobalts, Samariums, Neodyms, Bors oder Bariumferrit oder Strontiumferrit oder Gemische derselben verwendet. Als ferromagnetische, metallhaltige Verbindungen werden die Metalle ausgewählt aus der Gruppe Eisen, Kobalt, Nickel, Häußlersche Manganlegierungen oder Metalle der seltenen Erden oder Mischungen derselben eingesetzt. Beispiele dieser Verbindungen schließen Ferritpulver wie beispielsweise BaO· 6Fe₂O₃, MnO·ZnO·Fe₂O₃, γ-Fe₃O₄, PbO·6Fe₂O₃, SrO·6Fe₂O₃ ein. Weiterhin werden Verbindungen der seltenen Erden mit Kobalt, wie z. B. SmCo₅, PrCo₅, NdCo₅, SmPrCo₅, SmPrNdCo₅, Sm₂Co₁₇, Pr₂Co₁₇, Sm₂ (Co, Fe, Cu)₁₇ und Sm₂ (Co, Fe, Cu, M)₁₇, worin M, Ti, Zr oder Hf ist, eingesetzt. Auch können Legierungen der seltenen Erden des Eisens und des Bors wie Nd₂Fe₁₄B, Nd₂Fe₁₂Co₂B, Pr₂Fe₁₄B verwendet werden. Ferner werden Fe-Cr-Co-magnetische Pulver, Mn-Al-C-magnetische Pulver, Pt-Co-magnetische Pulver und Pt-Fe-magnetische Pulver eingesetzt.

Die erfindungsgemäße Zusammensetzung wird hergestellt durch Mischen der Komponenten, nämlich der metallhaltigen Verbindung und des Polymers der Formel I und gegebenenfalls weiterer Zusatzstoffe unter anschließendem Granulieren dieser Mischung. Die erfindungsgemäße Zusammensetzung ermöglicht es, in einem Verfahrensschritt ein beliebig geformtes, ein- oder mehrteiliges Formstück herzustellen, das nach der Magnetisierung als Permanentmagnet oder auch als induktiver Magnet verwendet werden kann. Dabei läßt sich die magnetische Stärke in Abhängigkeit der Konzentration der metallhaltigen Verbindung im Polymer steuern.

Mit Hilfe der Mehrkanalspritzgießtechnik ist es möglich, die erfindungsgemäße Zusammensetzung mit üblichen Polymeren in einem einzigen Spritzvorgang zu umspritzen. Auf diese Art und Weise lassen sich Formteile herstellen, die teils aus magnetisierbaren Bereichen und teils aus nicht magnetisierbaren Bereichen bestehen.

Ein aus der erfindungsgemäßen Zusammensetzung hergestelltes Formteil besitzt alle vorteilhaften Eigenschaften des verwendeten Kunststoffs, wie hohe Schlagzähigheit, gute Korrosionsbeständigkeit, geringeres Gewicht und längere Haltbarkeit. Hinzu kommen die bekannten Eigenschaften eines metallischen Magneten. Somit lassen sich aus der erfindungsgemäßen Zusammensetzung Magnete mit thermoplastischen Kunststoffeigenschaften herstellen, die dem bisher üblichen Magneten durch ihre einfache und kostengünstige Herstellungsweise weitaus überlegen sind.

Ein weiterer Vorteil der erfindungsgemäßen Zusammensetzung ist, daß die Zusammensetzung und die daraus hergestellten Formteile elektrisch leitfähig und wärmeleitfähig sind und damit als Ersatzstoffe für metallische Leiter verwendet werden können.

So sind die erfindungsgemäßen Zusammensetzungen beispielsweise verwendbar als Kontaktzunge für Lampenfassungen, wobei die Lampenfassung im Zwei-Komponenten-Verfahren hergestellt wird. Eine weitere Einsatzmöglichkeit ist die Verwendung als Thermoelement in Form eines selbstregulierenden Heizleiters, als Material zur elektrischen Abschirmung von elektromagnetischer Strahlung (Elektrosmog) und zur Verhinderung statischer Aufladung.

Weitere mögliche Anwendungen, die auf der Wärmeleitfähigkeit der erfindungsgemäßen Zusammensetzung beruhen, sind der Einsatz als selbstregulierender Heizleiter zur Enteisung von Antennen, Scheibensprühanlagen, Türgriffen, Türschlössern und Schiebedachrahmen und zur Verhinderung des Beschlagens von Außen- und Innenspiegeln. Spiegel, die auf Basis der erfindungsgemäßen Zusammensetzung hergestellt werden, lassen sich galvanisieren, benötigen keine bespiegelte Glasoberfläche und sind selbstregulierende Heizleiter.

Das Material kann weiterhin auch zur Wärmeheizleitung im Sensortechnikbereich verwendet werden.

Somit ist ein weiterer Gegenstand des Patentes, ein Formteil, bestehend aus der erfindungsgemäßen Zusammensetzung sowie ein Verfahren zur Herstellung dieses Formteils.

Ein Formteil aus der Zusammensetzung wird hergestellt durch Mischen und Granulieren der metallhaltigen Verbindung und des Polymers und anschließendem Spritzgießen des spritzfähigen Granulats in einer Spritzgußmaschine bei Temperaturen von 180 bis 350°C. Als Plastifiziergeräte können ein- oder zweiwellige Schneckenextruder, ein Kneter (Hersteller Buss), "Farrel Continous Mixer" oder andere, Brabender-Mühlen, wie "Banbury-Mühlen" oder andere oder Henschel-Mixer, Kugelmühlen und Bandvermenger ("ribbon blender") verwendet werden.

Aus diesen Formkörpern lassen sich durch nachträgliche Magnetisierung in einem Magnetfeld magnetische Formkörper herstellen.

Die Zusammensetzung kann somit für Permanentmagnete und Induktionsmagnete bevorzugt verwendet werden. Im Falle der Herstellung von Induktionsmagneten wird der spritzgegossene Formkörper nach dem Abkühlen mit einer Induktionsspule versehen.

Überraschenderweise wurde festgestellt, daß die so gespritzten Formteile dimensionsbeständig sind, so daß der bisher übliche Sinterprozeß entfallen kann. Derartige Magnete können im Dauerbetrieb bei bis zu 180 °C eingesetzt werden. Ferner entfällt bei der Herstellung und Verarbeitung der erfindungsgemäßen Zusammensetzung der Einsatz von Lösungsmitteln.

Die Figuren 1 bis 5 sollen die Anwendungen der erfindungsgemäßen Zusammensetzung näher erläutern.

Figur 1 zeigt Anker- und Kompensationswicklung eines Gleichstrommotors, bei dem in einem ersten Spritzgießvorgang kunststoffgebundene, dauermagnetische Mischungen (1),(4),(2) eingeführt werden und in einem zweiten Spritzgießvorgang mit einem nichtmagnetischen Material diese kunststoffgebundenen Dauermagnete als Gehäuse (5) umspritzt werden.

Figur 2 zeigt einen Läufer mit geschränkten Stäben (2/1) wobei dieser Läufer als Einfachläufer (2/2), Staffelläufer (2/3) und Doppelstaffelläufer (2/4) verspritzt wird und in einem zweiten Spritzgießvorgang der Läuferkäfig mit höher schmelzendem, nicht magnetischem Polymer ausgespritzt wird.

Figur 3 beschreibt die Zweikanal- oder Mehrkanal-Spritzgießtechnik. Mit diesem Verfahren ist es möglich, ferromagnetische oder dauermagnetische, kunststoffgebundene Materialien in einem Spritzgießvorgang mit nicht magnetischen Materialien zu umspritzen. Dabei wird zunächst das nicht magnetisierbare Material A spritzgegossen und in einem anschließenden Schritt zusätzlich ein magnetisierbares Material B spritzgegossen. Nach Ende des Spritzgusses des Materials A erfolgt dann ein weiteres Spritzgießen mit Material B. So wird Material B mit Material A ummantelt.

Figur 4 zeigt einen Schichtplan für einen Dreischenkelkern eines Transformators. Auch hier können die Transformatorschenkel und Kerne mit ferromagnetisch ausgerüsteten Kunststoffen hergestellt werden. Ziffer (4/2) zeigt die erste Lage des Schichtplans, Ziffer (4/1) die zweite Lage.

Figur 5 zeigt einen Spaltpolmotor wobei die Ziffern (1), (5) den Hauptpol, die Ziffer (2) den Spaltpol, die Ziffer (3) die Kurzschlußwicklung und Ziffer (4) den Schaltpol bezeichnet.

In der Elektrotechnik bestehen für die erfindungsgemäß hergestellten, kunstoffgebundenen, magnetischen Formkörper vielfältige Einsatzmöglichkeiten. So können Dauermagnete beispielsweise als Magnetschalter in pneumatischen Ventilen, pneumatischen Kolben oder Hydraulikkolben eingesetzt werden. Ebenso lassen sich diese Materialien als Impulsschalter z. B. auf Schock- oder Geschwindigkeitsbeschleunigung oder Abbremsung einsetzen. Die so durch die Mischungsverhältnisse hergestellten Magnete können in Abhängigkeit der magnetischen Kraft gezielt für noch nicht bekannte Anwendungen eingesetzt werden.

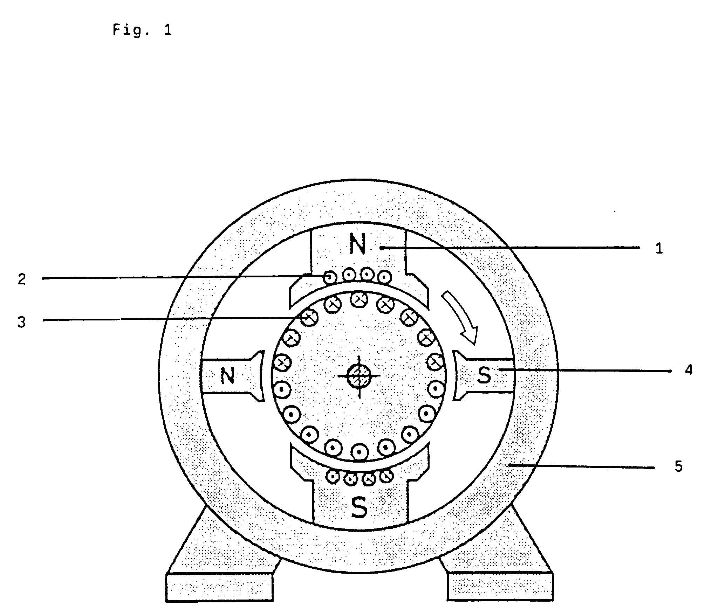

Die dauermagnetisch eingestellten, kunststoffgebundenen Mischungen lassen sich nach dem heutigen Stand der Technik zu jedem beliebigen Teil spritzformen und können dadurch in den meisten Fällen alle in Form gepreßten Teile und gesinterten Magnete, wie auch in Gleichstrommotoren, ersetzen. Vorteil dieser Spritzgießtechnik ist es, daß in einem zweiten Spritzgießvorgang mit einem nicht magnetischen Material, dies kann nach dem Stand der Technik jedes beliebige Kunststoffmaterial sein, die kunststoffgebundenen Magnete als Gehäuse umspritzt werden können (s. Figur 1).

Weiterhin können so hergestellte magnetische Formkörper in Elektrogeneratoren, in Dynamos und in Transformatoren Verwendung finden.

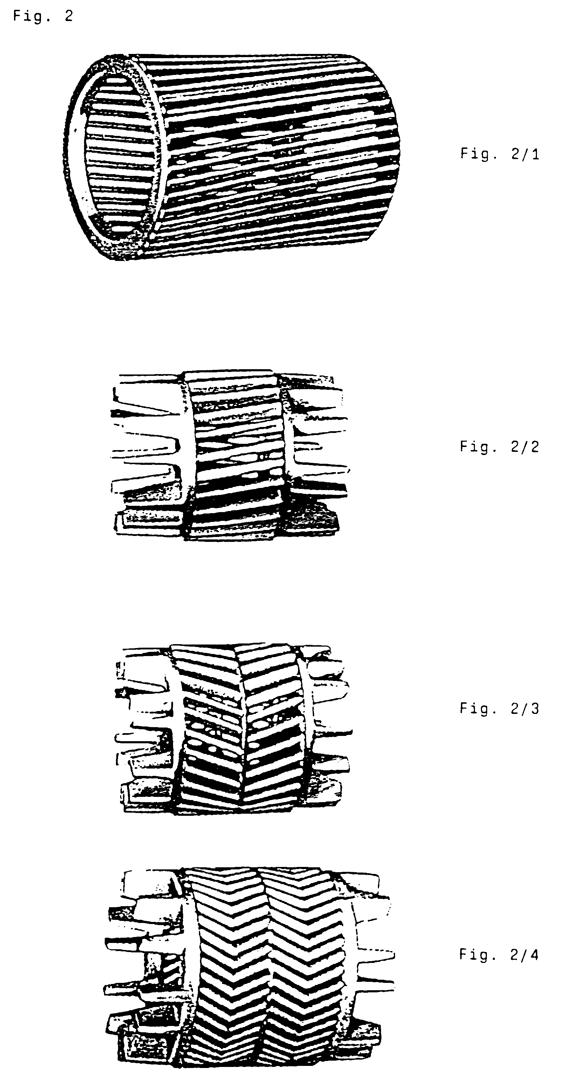

Die mit der erfindungsgemäßen Zusammensetzung hergestellten ferromagnetischen Materialien finden Anwendung als Induktionsmagnete jeglicher Art. Als Beispiele hierfür seien genannt die Läufer in Kurzschlußläufermotoren, wobei die Läufer mit geschränkten Stäben als Einfachläufer, Staffelläufer, Doppelstaffelläufer oder Mehrfachläufer vorgespritzt werden und in einem zweiten Spritzgießvorgang der Läuferkäfig mit höherschmelzendem, nichtmagnetischem Polymer ausgespritzt werden. Ebenso ist je nach Anwendung die Kernanspritzung und anschließend die Käfigstrukturspritzung durchführbar (s. Fig.2).

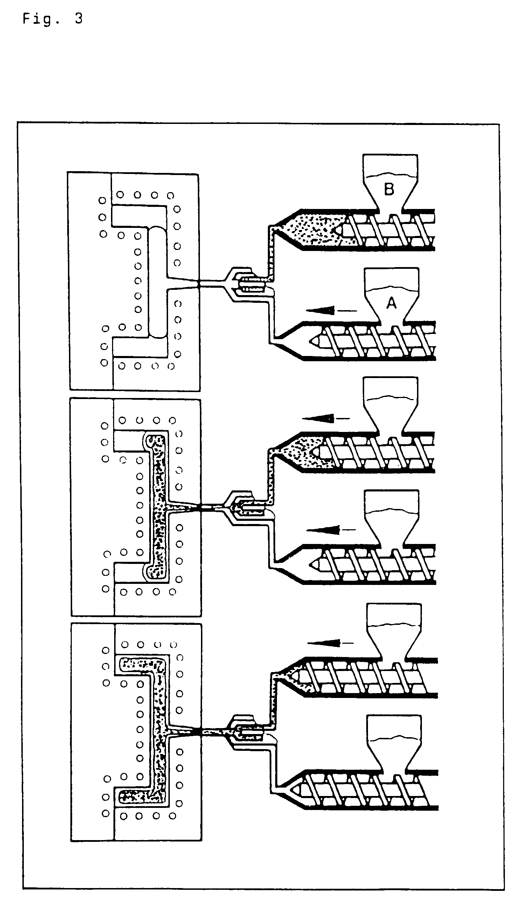

Aus der Spritzgießtechnik sind Zweikanal- oder Mehrkanaltechniken bekannt, wobei diese Verfahren es ermöglichen, ferromagnetische oder dauermagnetische Materialien in einem Spritzgießvorgang zu umspritzen (s. Fig 3).

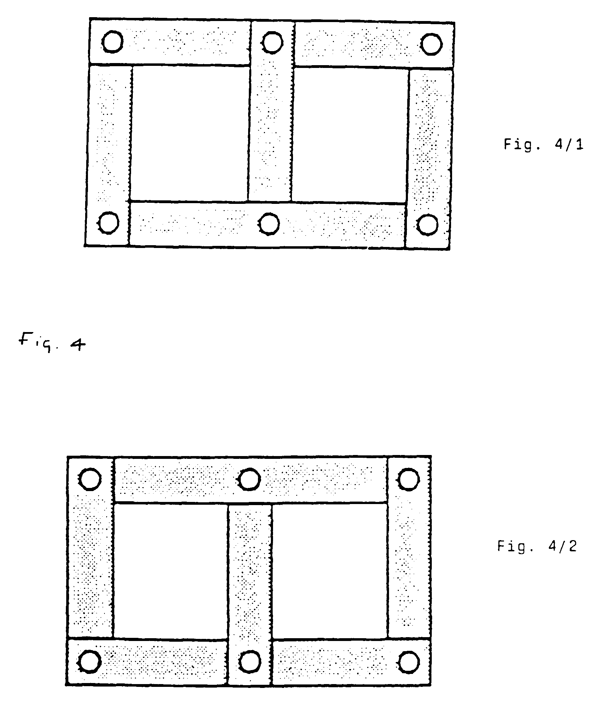

Mit dieser Technik ist es möglich, adäquat einem aus Eisenblechen hergestellten Transformator separate dünne, mehrschichtige Transformatorenschenkel und -kerne mit ferromagnetisch ausgerüsteten Kunststoffen herzustellen (s. Figur 4).

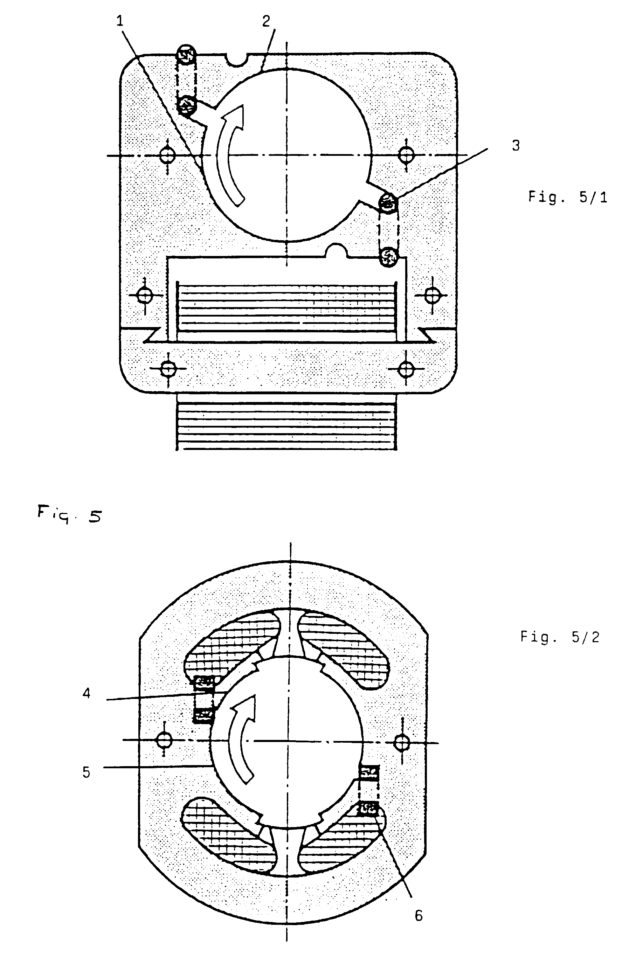

In so hergestellten, ferromagnetisch ausgerüsteten Kunststoffen können in einem Magnetfeld die ferromagnetischen Teilchen ausgerichtet werden, wodurch der elektrische Widerstand senkrecht zur Längsrichtung des Magnetfeldes erhöht wird, das heißt, Wirbelstromverluste verringert werden können. Ebenso kann man durch dieses Verfahren die Wirbelstromverluste im Gehäuse eines Spaltpolmotors verringern (s. Figur 5). Ebenso können die mit Metallpulver gefüllten Polymere als elektrisch leitende Polymere eingesetzt werden.

Die folgenden Beispiele sollen die vorstehende Erfindung näher erläutern, jedoch nicht beschränken.

### Beispiele

### Beispiel 1

Eine Mischung von 90 Gewichtsteilen anisotroper Kobalt-Samarium-Legierung wird mit 10 Gewichtsteilen Polybutylenterephthalat mit einem Schmelzflußindex (MFI von 250 °C/2,16 kg) 47,2 g pro 10 Minuten auf einem ZSK 30 (Zweiwellenextruder von Werner und Pfleiderer) bei 300 U/min und 20 kg/h Durchsatz gemischt und stranggranuliert.

Dieses spritzfähige Granulat wird in der Spritzgußmaschine bei einer Temperatur von 280 bis 300 °C zu einem Formteil spritzgegossen und anschließend nach dem Abkühlen in einem Magnetfeld magnetisiert für den Gebrauch als Dauermagnet.

### Beispiel 2

Eine Mischung von 6 Gewichtsprozent Polyethylenterephthalat, 6 Gewichtsprozent Polybutylenterephthalat werden mit 88 Gewichtsprozent Eisenpulver mit einer mittleren Teilchengröße von 4 bis 5 µm auf einem Zweiwellenextruder von Werner und Pfleiderer bei 280 U/min und 20 kg/h Durchsatz gemischt und stranggranuliert.

Dieses spritzfähige Granulat wird in der Spritzgußmaschine zu einem Formteil spritzgegossen, das für einen Induktionsmagneten eingesetzt werden kann.

### Beispiel 3

12 Gewichtsprozent Polyterephthalsäurehexamethylendiamid mit einem Schmelzpunkt von 236 °C werden mit 88 Gewichtsprozent einer Neodym-Eisen-Bor-Legierung mit einer mittleren Teilchengröße von 6 bis 8 µm in einem ZSK 30 (Zweiwellenextruder von Werner und Pfleiderer) bei 300 U/min und 18 kg/h gemischt und stranggranuliert. Dieses spritzfähige Granulat wird in der Spritzgußmaschine zu einem Formteil spritzgegossen und anschließend in einem Magnetfeld für den Gebrauch als Dauermagnet magnetisiert.

### Beispiel 4

14 Gewichtsprozent Polybutylenterephthalat mit einem Schmelzflußindex (250 °C/2,16 kg) von 47,2 g pro 10 Minuten, 2 Gewichtsprozent Methylbutadienstyrolkautschuk werden mit 84 Gewichtsprozent einer Neodym-Eisen-Bor-Legierung mit einem mittleren Teilchendurchmesser von 8 bis 10 µm in einem ZSK 30 (Zweiwellenextruder von Werner und Pfleiderer) bei 290 U/min und 21 kg/h Durchsatz gemischt und stranggranuliert. Dieses spritzfähige Granulat wird in der Spritzgußmaschine zu einem Formteil spritzgegossen und anschließend in einem Magnetfeld für den Gebrauch als Dauermagnet magnetisiert.

### Beispiel 5

Eine Mischung von 10 Gewichtsprozent Polybutylenterephthalat mit einem Schmelzflußindex von (250 °C/2,16 kg) 47,2 g pro 10 Minuten, 10 Gewichtsprozent Polycarbonat als Zusatzstoff, Schmelzflußindex (300 °C/1,2 kg) 10 g pro 10 Minuten und 6 Gewichtsprozent Modifier Paraloid® EXL 3600 werden mit 74 Gewichtsprozent einer Neodym-Eisen-Bor-Legierung mit einer mittleren Korngröße von 10 bis 12 pm in einem ZSK 30 (Zweiwellenextruder von Werner und Pfleiderer) bei 300 U/min und 20 kg/h Durchsatz gemischt und stranggranuliert. Das spritzfähige Granulat wird in der Spritzgußmaschine zu einem Formteil spritzgegossen und anschließend in einem Magnetfeld für den Gebrauch von Dauermagneten magnetisiert.

### Beispiel 6

Im Beispiel 6 werden die Komponenten wie in Beispiel 5 eingesetzt, jedoch auf einem Kneter (Hersteller: Buss) gemischt, stranggranuliert und spritzgegossen.

### Beispiel 7

Eine Mischung aus 90 Gewichtsprozent anisotroper Kobalt-Samarium-Legierung, 8 Gewichtsprozent Paraphenylensulfid und 2 Gewichtsprozent Polybutylenterephthalat wird auf einem Kneter (Hersteller: Buss) oder Zweiwellenextruder gemischt und stranggranuliert. Dieses spritzfähige Granulat wird in der Spritzgußmaschine bei einer Temperatur von 320 bis 340 °C zu einem Formteil spritzgegossen und anschließend nach dem Abkühlen in einem Magnetfeld magnetisiert.

### Beispiel 8

8 Gewichtsprozent Polyphenylenether, 5 Gewichtsprozent Polystyrol und 2 Gewichtsprozent Polybutylenterephthalat werden mit 85 Gewichtsprozent ferromagnetischem Kobaltpulver mit einer mittleren Teilchengröße von 8 bis 10 µm auf einem Zweiwellenextruder von Werner und Pfleiderer bei 280 U/min und 20 kg/h Durchsatz gemischt und stranggranuliert. Dieses spritzfähige Granulat wird in der Spritzgußmaschine zu einem Formteil spritzgegossen, das für einen Induktionsmagneten eingesetzt werden kann.

### Beispiel 9

Es werden die Komponenten wie in Beispiel 7 eingesetzt, jedoch auf einem Einwellenextruder (Hersteller: Bamag Typ 11.4) stranggranuliert und spritzgegossen. Man erhält ein Formteil, das nach dem Abkühlen in einem Magnetfeld magnetisiert wird.

## Patentansprüche

1. Zusammensetzung enthaltend 45 bis 99 Gew% einer dauermagnetischen und/oder ferromagnetischen metallhaltigen Verbindung in Pulverform und 1 bis 55 Gew% eines Polymers der Formel I,
HO-[-CO-R₁-CO-X-Y-Z-]ₙ-H (I),
worin R₁ gleich Phenyl, Naphtyl, Cyclohexyl, Cyclohexenyl oder ein C₁ bis C₄ Alkyl-substituiertes Derivat davon ist, und wenn R₁ gleich Phenyl ist, die Carboxy-Gruppen in ortho-, meta- oder para-Stellung zueinander stehen,
X, Z gleich O oder NR₂ sind, wobei R₂ gleich H oder C₁ bis C₄ Alkyl ist,
Y gleich (CH₂)ₘ oder Phenyl, Cyclohexyl, oder Cyclopentyl ist und m gleich 1 bis 12 ist und
n eine ganze Zahl ist.

2. Zusammensetzung nach Anspruch 1, dadurch gekennzeichnet, daß sie ein Polymer ausgewählt aus der Gruppe Poly-(C₁-C₄)alkylenterephthalat, Polynaphtylsäureamid, Polyisophthalsäureamid, Polyterephthalsäureamid, Polyterephthalsäurehexamethylendiamid oder Gemische derselben enthält.

3. Zusammensetzung nach Ansprüchen 1 oder 2, dadurch gekennzeichnet, daß sie Polyethylenterephthalat und/oder Polybutylenterephthalat enthält.

4. Zusammensetzung nach Ansprüchen 1 bis 3, dadurch gekennzeichnet, daß sie dauerhaft magnetische Metallegierungen und/oder ferromagnetische, metallhaltige Verbindungen enthält.

5. Zusammensetzung nach Ansprüchen 1 bis 4, dadurch gekennzeichnet, daß als dauerhaft magnetisches Material Legierungen der Metalle ausgewählt aus der Gruppe Aluminium, Nickel Cobalt, Samarium, Neodym, Bor oder Bariumferrit oder Strontiumferrit oder Gemische derselben enthalten sind.

6. Zusammensetzung nach Ansprüchen 1 bis 5, dadurch gekennzeichnet, daß als ferromagnetische metallhaltige Verbindungen die Metalle ausgewählt aus der Gruppe Eisen, Cobalt, Nickel, Heußlersche Manganlegierungen oder Metalle der Seltenen Erden oder Mischungen derselben enthalten sind.

7. Zusammensetzung nach Ansprüchen 1 bis 6, dadurch gekennzeichnet, daß dem Polymer der Formel I weitere Polymere aus der Gruppe Polyester, Polyesteramide, Polyphenylenether, Polyphenylensulfide, aromatische Polyetheramide, Polyamide, Polylactame zugesetzt werden.

8. Zusammensetzung nach Anspruch 7, dadurch gekennzeichnet, daß Polymere ausgewählt aus der Gruppe Polydiaminobutandiadipidamid, Polyhexamethylensebacidamid, Polyhexamethylendodecanamid, Polyaminoundecanamid, Polylaurinlactam, Polyarylamid oder Gemische derselben zugesetzt werden.

9. Zusammensetzung nach Ansprüchen 1 bis 8, dadurch gekennzeichnet, daß die Zusammensetzung 74 bis 99 Gew% metallhaltige Verbindung und 1 bis 26 Gew% Polymer enthält.

10. Zusammensetzung nach Ansprüchen 1 bis 9, dadurch gekennzeichnet, daß die Zusammensetzung 84 bis 92 Gew% metallhaltige Verbindung und 8 bis 16 Gew% Polymer enthält.

11. Verfahren zur Herstellung der Zusammensetzung gemäß Ansprüchen 1 bis 10, dadurch gekennzeichnet, daß die Komponenten gemischt und granuliert werden.

12. Formteil bestehend aus der Zusammensetzung gemäß Ansprüchen 1 bis 10.

13. Verfahren zur Herstellung eines Formteils gemäß Anspruch 12, dadurch gekennzeichnet, daß die Komponenten gemischt und granuliert werden und das spritzfähige Granulat in einer Spritzgußmaschine bei einer Temperatur von 180 bis 350°C zu einem Formteil spritzgegossen wird.

14. Verfahren nach Anspruch 13, dadurch gekennzeichnet, daß die Komponenten vor dem Spritzgießen auf einem Kneter oder einer ähnlichen Plastifiziermaschine gemischt werden.

15. Magnetischer Formkörper bestehend aus der Zusammensetzung gemäß Ansprüchen 1 bis 10.

16. Verfahren zur Herstellung eines magnetischen Formkörpers, gemäß Anspruch 15, dadurch gekennzeichnet, daß ein Formteil gemäß Anspruch 13 hergestellt wird und dieses dann in einem Magnetfeld dauerhaft magnetisiert wird.

17. Verwendung der Zusammensetzung gemäß Ansprüchen 1 bis 10, für Permanentmagnete und Induktionsmagnete.

18. Verwendung nach Anspruch 17, dadurch gekennzeichnet, daß die Magnete als Magnetschalter, Impulsschalter, Magnete in Gleichstrommotoren, in Elektrogeneratoren, in Dynamos, in Transformatoren und als Induktionsmagnete für Läufer in Kurzschlußläufermotoren verwendet werden.

## Claims

1. A composition, containing from 45 to 99 weight persent of a permanent-magnetic and/or ferromagnetic metal-containing compound in form of a powder and from 1 to 55 weight percent of a polymer of formula I
HO-[-CO-R₁-CO-X-Y-Z-]ₙ-H (I)
wherein R₁ is phenyl, naphthyl, cyclohexyl, cyclohexenyl, or a C₁ to C₄ alkyl-substituted derivative thereof, and, if R₁ is phenyl, the carboxy groups are in ortho, meta or para position to each other;
X, Z are O or NR₂, wherein R₂ is H or C₁ to C₄ alkyl;
Y is (CH₂)ₘ or phenyl, cyclohexyl or cyclopentyl, and m is from 1 to 12; and
n is an integer.

2. The composition according to claim 1, characterized in that it contains a polymer selected from the group of poly(C₁-C₄)alkylene terephthalate, polynaphthalic amide, polyisophthalic amide, polyterephthalic amide, polyterephthalic acid hexamethylenediamide or mixtures thereof.

3. The composition according to claims 1 or 2, characterized in that it contains polyethylene terephthalate and/or polybutylene terephthalate.

4. The composition according to claims 1 to 3, characterized in that it contains permanent-magnetic metal alloys and/or ferromagnetic metal-containing compounds.

5. The composition according to claims 1 to 4, characterized in that alloys of metals selected from the group of aluminum, nickel, cobalt, samarium, neodymium, boron, or barium ferrite or strontium ferrite or mixtures thereof are contained as the permanent-magnetic material.

6. The composition according to claims 1 to 5, characterized in that metals selected from the group of iron, cobalt, nickel, Heusler's manganese alloys or rare earth metals or mixtures thereof are contained as ferromagnetic metal-containing compounds.

7. The composition according to claims 1 to 6, characterized in that additional polymers from the group of polyesters, polyester amides, polyphenylene ethers, polyphenylene sulfide, aromatic polyether amides, polyamides, polylactames are added to the polymer of formula I.

8. The composition according to claim 7, characterized in that polymers selected from the group of polydiaminobutane diadipamide, polyhexamethylene sebacamide, polyhexamethylene dodecaneamide, polyaminoundecaneamide, polylaurinlactame, polyarylamide or mixtures thereof are added.

9. The composition according to claims 1 to 8, characterized in that the composition contains from 74 to 99 weight percent metal-containing compound and from 1 to 26 weight percent polymer.

10. The composition according to claims 1 to 9, characterized in that the composition contains from 84 to 92 weight percent metal-containing compound and from 8 to 16 weight percent polymer.

11. A process for producing the composition according to claims 1 to 10, characterized in that the components are mixed and granulated.

12. A molded article, consisting of the composition according to claims 1 to 10.

13. A process for producing a molded article according to claim 12, characterized in that the components are mixed and granulated, and the injectable granulate is injection-molded in a molded article in an injection molding machine at a temperature of from 180 to 350°C.

14. The process according to claim 13, characterized in that the components are mixed on a kneader or a similar plasticator prior to injection molding.

15. A magnetic molded article, consisting of a composition according to claims 1 to 10.

16. A process for producing a magnetic molded article according to claim 15, characterized in that a molded article is produced according to claim 13, which then is permanent-magnetized in a magnetic field.

17. Use of the composition according to claims 1 to 10 for permanent magnets and induction magnets.

18. The use according to claim 17, characterized in that the magnets are used as magnetic switches, pulse switches, magnets in DC motors, in electric generators, in dynamos, in transformers, and as induction magnets for rotors in squirrel cage motors.

## Revendications

1. Composition contenant entre 45 et 99 pour-cent en poids d'une combinaison métallifère permanentement magnétique et/ou ferromagnétique sous forme de poudre, et entre 1 et 55 pour-cent en poids d'un polymère de la formule I,
HO-[-CO-R₁-CO-X-Y-Z-]ₙ-H (I),
où R₁ est du phényle, naphtyle, cyclohexyle, cyclohexenyle ou un dérivé de cela avec un groupe alkyle C₁ à C₄, et, si R₁ est du phényle, les carboxygroupes se trouvent l'un par rapport à l'autre en ortho-, méta- ou para-position,
X, Z sont O ou NR₂, où R₂ est H ou alkyle C₁ à C₄,
Y est (CH₂)ₘ ou du phényle, cyclohexyle, ou cyclopentyle et m est égal à 1 à 12 et
n est un nombre entier.

2. Composition selon la revendication 1, caractérisée par le fait qu'elle contient un polymère choisi dans le groupe poly-(C₁-C₄)alkylène-téréphtalate, amide d'acide polynaphtylique, amide d'acide polyisophthalique, amide d'acide polytéréphtalique, diamide d'acide polytéréphtalique-hexamétylène ou des mélanges de ceux-ci.

3. Composition selon les revendications 1 ou 2, caractérisée par le fait qu'elle contient du polyéthylène-téréphtalate et/ou du polybutylène-téréphtalate.

4. Composition selon les revendications 1 à 3, caractérisée par le fait qu'elle contient des alliages métalliques permanentement magnétiques et/ou des combinaisons métallifères ferromagnétiques.

5. Composition selon les revendications 1 à 4, caractérisée par le fait que des alliages des métaux choisis dans le groupe aluminium, nickel, cobalt, samarium, néodyme, bore ou ferrite de baryum ou ferrite de strontium ou mélanges de ceux-ci sont contenus en tant que matière permanentement magnétique .

6. Composition selon les revendications 1 à 5, caractérisée par le fait que les métaux choisis dans le groupe fer, cobalt, nickel, alliages Heusler de manganèse ou métaux des terres rares ou mélanges de ceux-ci sont contenus en tant que combinaisons métallifères ferromagnétiques.

7. Composition selon les revendications 1 à 6, caractérisée par le fait que l'on ajoute au polymère de la formule I d'autres polymères du groupe polyester, polyamide d'ester, polyphénylène éther, polyphénylènes sulfure, amides polyéther aromatiques, polyamides , polylactames.

8. Composition selon la revendication 7, caractérisée par le fait que l'on ajoute des polymères choisis dans le groupe amide de polydiaminobutane-diadipide, amide de polyhexaméthylène-sébacide, amide de polyhexaméthylène-dodécane, amide de polyaminoundécane, polylaurine-lactame, amide polyaryle ou mélanges de ceux-ci.

9. Composition selon les revendications 1 à 8, caractérisée par le fait que la composition contient entre 74 et 99pour-cent en poids de combinaison métallifère et de 1 à 26 pour-cent en poids de polymère.

10. Composition selon les revendications 1 à 9, caractérisée par le fait que la composition contient de 84 à 92 pour-cent en poids de combinaison métallifère et de 8 à 16 pour-cent en poids de polymère.

11. Procédé de fabrication de la composition selon les revendications 1 à 10, caractérisé par le fait que les composants sont mélangés et granulés.

12. Pièce moulée se composant de la composition selon les revendications 1 à 10.

13. Procédé de fabrication d'une pièce moulée selon la revendication 12, caractérisé par le fait que les composants sont mélangés et granulés et que le granulat injectable est moulé par injection dans une presse d'injection, à une température comprise entre 180°C et 350°C pour donner une pièce moulée.

14. Procédé selon la revendication 13, caractérisé par le fait que, avant le moulage par injection, les composants sont mélangés sur un pétrisseur ou sur une machine semblable de plastification.

15. Corps moulé magnétique se composant de la composition selon les revendications 1 à 10.

16. Procédé de fabrication d'un corps moulé magnétique, selon la revendication 15, caractérisé par le fait qu'une pièce moulée selon la revendication 13 est fabriquée et que celle-ci est ensuite aimentée de façon permanente dans un champ magnétique.

17. Utilisation de la composition selon les revendications 1 à 10, pour des aimants permanents et des aimants d'induction.

18. Utilisation selon la revendication 17, caractérisée par le fait que les aimants sont utilisés en tant que commutateurs magnétiques, commutateurs à impulsions, aimants dans des moteurs à courant continu, dans des générateurs électriques, dans des dynamos, dans des transformateurs et en tant qu'aimants d'induction pour des rotors dans des moteurs à cage d'écureuil.
